# EUROPEAN PATENT SPECIFICATION

(11) **EP 3 287 423 B1**
(45) Date of publication and mention of the grant of the patent: **25.12.2019**
(21) Application number: 17794207.5
(22) Date of filing: 14.02.2017
(51) Int. Cl.: C03C 3/095

(54) **HIGH PERFORMANCE GLASS FIBRE COMPOSITION, AND GLASS FIBRE AND COMPOSITE MATERIAL THEREOF**
HOCHLEISTUNGSGLASFASERZUSAMMENSETZUNG UND GLASFASER UND VERBUNDMATERIAL DARAUS
COMPOSITION DE FIBRE DE VERRE HAUTE PERFORMANCE, AINSI QUE FIBRE DE VERRE ET MATÉRIAU COMPOSITE ASSOCIÉS

(30) Priority: 26.01.2017 CN 201710057315
(43) Date of publication of application: 28.02.2018
(73) Proprietor: Jushi Group Co., Ltd., Tongxiang, Zhejiang 314500 (CN)
(72) Inventor: ZHANG, Lin, Tongxiang Zhejiang 314500 (CN); XING, Wenzhong, Tongxiang Zhejiang 314500 (CN); CAO, Guorong, Tongxiang Zhejiang 314500 (CN); GU, Guijiang, Tongxiang Zhejiang 314500 (CN)
(74) Representative: dompatent von Kreisler Selting Werner - Partnerschaft von Patent- und Rechtsanwälten mbB
(86) International application number: PCT/CN2017/073447
(87) International publication number: WO 2017/197933

(56) References cited:
- WO-A2-2016/165506
- CN-A- 105 392 744
- CN-A- 106 007 369
- CN-A- 106 082 639
- CN-B- 102 849 958
- US-A1- 2016 068 428
- US-A1- 2016 068 428

## Description

### FIELD OF THE INVENTION

The present invention relates to a glass fiber composition, specifically to a glass fiber composition that can be used as a reinforcing base material for composites, and to a glass fiber and composite material there from.

### BACKGROUND OF THE INVENTION

Glass fiber is an inorganic fiber material that can be used to reinforce resins to produce composite materials with good performance. As a reinforcing base material for advanced composite materials, high-performance glass fibers were originally used mainly in the aerospace industry or the national defense industry. With the progress of science and technology and the development of economy, high-performance glass fibers have been widely used in civil and industrial fields such as wind blades, pressure vessels, offshore oil pipes and auto industry. In consequence, it has become an urgent challenge to develop a glass fiber that has higher strength and modulus, lower production risks and costs and that, meanwhile, is suitable for large-scale production with refractory-lined furnaces so as to greatly improve the cost performance of the resulting high-performance glass fiber.

S-glass is the earliest high-performance glass that is based on an MgO-Al₂O₃-SiO₂ system. According to ASTM, S-glass is a type of glass comprised mainly of such oxides as magnesia, alumina and silica, and a typical solution is S-2 glass developed by the US. The total weight percentages of SiO₂ and Al₂O₃ in the S-2 glass reaches 90% and the weight percentage of MgO is about 10%; the melting temperature of the glass is up to over 1600°C and the forming temperature and liquidus temperature up to 1571°C and 1470°C, respectively. Also, the crystallization rate of S-2 glass is fast. Therefore, it is impossible to realize large-scale production of S-2 glass with refractory-lined furnaces, and is even difficult to achieve a direct-melt production. All these lead to excessive difficulty, low efficiency and high cost for the production of S-2 glass fiber. Relevant data shows that the elastic modulus of S-2 glass is typically 89-90GPa, and the tensile strength of its impregnated roving typically more than 3400MPa.

France developed R glass that is based on an MgO-CaO-Al₂O₃-SiO₂ system; however, the total contents of SiO₂ and Al₂O₃ remains high in the traditional R glass, thus causing difficulty in fiber formation as well as a great risk of crystallization. The forming temperature of the R glass reaches 1410°C and its liquidus temperature up to 1350°C. At the same time, there is no effective solution in the tradition R glass to improve the crystallization performance, as the ratio of Ca to Mg is inappropriately designed by introducing too much CaO and too little MgO that leads to a significant loss of glass properties and a high crystallization rate. All these factors have caused difficulty in effectively attenuating glass fiber and consequently in realizing large-scale industrial production. Therefore, various companies have developed a number of improved R glasses by adjusting the glass compositions, and the typical solutions are Hiper-tex and H-glass. Relevant data shows that the elastic modulus of the traditional R glass and improved R glass is typically 87-90GPa, and the tensile strength of their impregnated roving typically 2300-2900MPa.

China developed an HS glass primarily containing SiO₂, Al₂O₃ and MgO while also including high contents of Li₂O, B₂O₃ and Fe₂O₃. Its forming temperature is 1310-1330°C and its liquidus temperature is 1360-1390°C. Both temperatures are much lower than those of S glass. However, since its forming temperature is lower than its liquidus temperature, which is unfavorable for the control of glass fiber attenuation, the forming temperature has to be increased and specially-shaped tips have to be used to prevent a glass crystallization phenomenon from occurring in the fiber attenuation process. This causes difficulty in temperature control and also makes it difficult to realize large-scale industrial production. Meanwhile, as large amounts of Li₂O and B₂O₃ are used in a combined amount typically over 2.5% and even 3%, the mechanical properties and corrosion resistance performance are adversely affected. Relevant data shows that the elastic modulus of HS glass is typically 86-89GPa, and the tensile strength of its impregnated roving typically

To sum up, we find that, at present stage, the actual production of various high-performance glass fibers generally faces the difficulty of large-scale production with refractory-lined furnaces, specifically manifested by excessively high liquidus temperature, excessively high rate of crystallization, high forming temperature, refining difficulty of molten glass and a narrow temperature range (ΔT) for fiber formation and even a negative ΔT value. Therefore, most companies tend to reduce the production difficulty by compromising some of the glass properties, thus making it impossible to improve the strength and modulus of the above-mentioned glass fibers with the growth of production scale. The problem of an insufficient strength and modulus has long remained unresolved in the production of S glass fiber.

US 2016/0068428 and CN106007369 A disclose aluminosilcate glass compositions also containing CaO, MgO, Li₂O and Y₂O₃ and fibres made from these compositions.

### SUMMARY OF THE INVENTION

The present invention aims to solve the issue described above. The purpose of the present invention is to provide a high-performance glass fiber composition which not only significantly improves the strength and modulus of glass fiber, but also remarkably reduces the crystallization rate and liquidus temperature, thereby overcoming the technical problem of too high rate of crystallization and too high liquidus temperature in the traditional high-performance glasses, so that the temperature range for the formation of glass fiber is significantly broadened; meanwhile, the said glass fiber composition can reduce the high temperature viscosity, forming temperature and bubbling ratio of the glass, which help to reduce the energy consumption for production. Therefore, the glass fiber composition according to the present invention is particularly suitable for large-scale production with refractory-lined furnaces.

According to one aspect of the present invention, a glass fiber composition is provided comprising the following components expressed as percentage by weight:

| | |
|---|---|
| SiO₂ | 57.4-61.4% |
| Al₂O₃ | 17.1-21% |
| MgO | 10.3-14% |
| Y₂O₃ | 1.1-4.3% |
| CaO | <6.5% |
| Li₂O+Na₂O+K₂O | ≤1% |
| Li₂O | ≤0.75% |
| TiO₂ | <1.8% |
| Fe₂O₃ | 0.05-1.2% |

In addition, the combined weight percentage of the components listed above is at least 98%, and the weight percentage ratio C1= Al₂O₃/SiO₂ is 0.294-0.346, the weight percentage ratio C2= (Al₂O₃+MgO+Li₂O)/Y₂O₃ is 7.2-15.

Wherein, the said composition comprises the following components expressed as percentage by weight:

| | |
|---|---|
| SiO₂ | 57.4-61.4% |
| Al₂O₃ | 17.5-20.5% |
| MgO | 10.3-14% |
| Y₂O₃ | 2-4.2% |
| CaO | ≤6.3% |
| Li₂O+Na₂O+K₂O | ≤1% |
| Li₂O | ≤0.75% |
| TiO₂ | <1.4% |
| Fe₂O₃ | 0.05-1% |

In addition, the combined weight percentage of the components listed above is at least 98%, and the weight percentage ratio C1= Al₂O₃/SiO₂ is 0.294-0.346.

Wherein, the said composition comprises the following components expressed as percentage by weight:

| | |
|---|---|
| SiO₂ | 58-60.4% |
| Al₂O₃ | 17.5-20.5% |
| MgO | 10.3-14% |
| Y₂O₃ | 2-4% |
| CaO | 2-6% |
| Li₂O+Na₂O+K₂O | ≤1% |
| Li₂O | ≤0.75% |
| TiO₂ | <1.4% |
| Fe₂O₃ | 0.05-1% |

In addition, the combined weight percentage of the components listed above is at least 98%, and the weight percentage ratio C1=Al₂O₃/SiO₂ is 0.294-0.346. wherein, the restricted weight percentage ratio C3= (Y₂O₃+MgO)/SiO₂ is at least 0.2;
wherein, the restricted content range of MgO is greater than 11% but not greater than 13.5% in percentage by weight;
wherein, the restricted content range of MgO is 11.2-13.5% in percentage by weight;
wherein, the said composition contains one or more components selected from the group consisting of CeO₂, SrO, La₂O₃, ZnO, B₂O₃ and ZrO₂, with the combined weight percentages less than 2%;
wherein, the said composition contains SrO in a content of 0-1.7% in percentage by weight;
wherein, the said composition contains CeO₂ in a content of 0-0.55% in percentage by weight;
wherein, the restricted total weight percentage of Al₂O₃+MgO+Li₂O is at least 28.1%;
wherein, the restricted total weight percentage of Al₂O₃+MgO+Li₂O is at least 29.1%;
wherein, the restricted weight percentage ratio of MgO/CaO is at least 1.6;
wherein, the restricted content range of Li₂O is 0.05-0.7% in percentage by weight;
wherein, the restricted total weight percentage of Li₂O+Na₂O+K₂O is 0.25-0.98%;

Wherein, the said composition comprises the following components expressed as percentage by weight:

| | |
|---|---|
| SiO₂ | 57.4-61.4% |
| Al₂O₃ | 17.5-20.5% |
| MgO | 10.3-14% |
| Y₂O₃ | 2-4% |
| CaO | ≤6.3% |
| Li₂O+Na₂O+K₂O | ≤1% |
| Li₂O | ≤0.75% |
| TiO₂ | <1.4% |
| Fe₂O₃ | 0.05-1% |

In addition, the combined weight percentage of the components listed above is at least 98%; the weight percentage ratio C1= Al₂O₃/SiO₂ is 0.294-0.346; and the weight percentage ratio C2= (Al₂O₃+MgO+Li₂O)Y₂O₃ 7.2-15.

Wherein, the said composition comprises the following components expressed as percentage by weight:

| | |
|---|---|
| SiO₂ | 58-60.4% |
| Al₂O₃ | 17.5-20.5% |
| MgO | 10.5-14% |
| Y₂O₃ | 2-4% |
| CaO | 2-6% |
| Li₂O+Na₂O+K₂O | ≤1% |
| Li₂O | ≤0.75% |
| TiO₂ | <1.4% |
| Fe₂O₃ | 0.05-1% |

In addition, the combined weight percentage of the components listed above is at least 98%; the weight percentage ratio C1= Al₂O₃/SiO₂ is 0.294-0.346; the weight percentage ratio C2= (Al₂O₃+MgO+Li₂O)/Y₂O₃ is 7.2-15; and the combined weight percentage of Al₂O₃+MgO+Li₂O is at least 28.1%.

Wherein, the said composition comprises the following components expressed as percentage by weight:

| | |
|---|---|
| SiO₂ | 58-60.4% |
| Al₂O₃ | 17.7-20.1% |
| MgO | greater than 11% but not greater than 13.5% |
| Y₂O₃ | 2-4% |
| CaO | 2.3-5.8% |
| Li₂O+Na₂O+K₂O | ≤1% |
| Li₂O | 0.05-0.7% |
| TiO₂ | <1.4% |
| Fe₂O₃ | 0.05-1% |

In addition, the combined weight percentage of the components listed above is at least 98%; the weight percentage ratio C1= Al₂O₃/SiO₂ is 0.294-0.346; the weight percentage ratio C2= (Al₂O₃+MgO+Li₂O)/Y₂O₃ is 7.2-15; and the combined weight percentage of Al₂O₃+MgO+Li₂O is at least 29.1%.
wherein, the restricted content of Y₂O₃ is 2.3-3.9% in percentage by weight;
wherein, the said composition contains La₂O₃ in a content of 0-0.05% in percentage by weight;

Wherein, the said composition comprises the following components expressed as percentage by weight:

| | |
|---|---|
| SiO₂ | 57.4-61.4% |
| Al₂O₃ | 17.5-20.5% |
| MgO | 10.3-14% |
| Y₂O₃ | 2-4.2% |
| CaO | ≤6.3% |
| Li₂O+Na₂O+K₂O | ≤1% |
| Li₂O | ≤0.75% |
| TiO₂ | <1.4% |
| Fe₂O₃ | 0.05-1% |
| SrO+CeO₂+F₂ | <2% |
| SrO | 0-1.7% |
| CeO₂ | 0-0.55% |
| F₂ | 0-0.5% |

In addition, the weight percentage ratio C1= Al₂O₃/SiO₂ is 0.294-0.346, and the weight percentage ratio C2= (Al₂O₃+MgO+Li₂O)/Y₂O₃ is 7.2-15.

According to another aspect of this invention, a glass fiber produced with said glass fiber composition is provided.

According to yet another aspect of this invention, a composite material incorporating said glass fiber is provided..

The main inventive points of the glass fiber composition according to this invention lie in that, by introducing high contents of Y₂O₃ and MgO, significantly reducing the content of CaO, controlling the content of alkali metal oxides and keeping tight control on the ratios of Al₂O₃/SiO₂, (Al₂O₃+MgO+Li₂O)/Y₂O₃ and (Y₂O₃+MgO)/SiO₂ respectively, while reasonably configuring the content ranges of Al₂O₃, SiO₂, Y₂O₃, MgO, Li₂O, CaO and Al₂O₃+MgO+Li₂O, utilizing the special compensation effect and accumulation effect of yttrium in the glass structure as well as the synergistic effect among the ions of yttrium, magnesium and lithium, and effectively controlling the Al/Si ratio and the rare earths content, the said composition enables an appropriate amount of vacancies that leads to more orderly ion packing, more compact stacking structure of the glass and higher difficulty of ions reorganization and arrangement during the crystallization process. Therefore, the glass fiber composition of this invention significantly increases the glass strength and modulus, effectively reduces the glass crystallization rate, secures a desirable temperature range (ΔT) for fiber formation and enhances the refinement of molten glass, thus making it particularly suitable for high performance glass fiber production with refractory-lined furnaces.

Specifically, the glass fiber composition according to the present invention comprises the following components expressed as percentage by weight:

| | |
|---|---|
| SiO₂ | 57.4-61.4% |
| Al₂O₃ | 17.1-21% |
| MgO | 10.3-14% |
| Y₂O₃ | 1.1-4.3% |
| CaO | <6.5% |
| Li₂O+Na₂O+K₂O | <1% |
| Li₂O | ≤0.75% |
| TiO₂ | <1.8% |
| Fe₂O₃ | 0.05-1.2% |

In addition, the combined weight percentage of the components listed above is at least 98%, and the weight percentage ratio C1= Al₂O₃/SiO₂ is 0.294-0.346.

The effect and content of each component in said glass fiber composition is described as follows:
SiO₂ is a main oxide forming the glass network and has the effect of stabilizing all the components. A SiO₂ content which is too low will affect the mechanical properties of the glass; whereas a content which is too high will cause the glass viscosity and liquidus temperature to be excessively high thereby resulting in difficulty for large-scale production. Therefore, in the glass fiber composition of the present invention, the restricted content range of SiO₂ is 57.4-61.4%, preferably 58-60.4%, and more preferably greater than or equal to 58% but lower than 60%.

Al₂O₃ is another main oxide forming the glass network. When combined with SiO₂, it can have a substantive effect on the mechanical properties of the glass and a significant effect on preventing glass phase separation and on crystallization resistance. An Al₂O₃ content which is too low will make it impossible to obtain sufficiently high mechanical properties, especially modulus; too high a content will significantly increase the risks of glass phase separation and crystallization. The restricted content range of Al₂O₃ in this invention is 17.1-21%. Preferably, the Al₂O₃ content can be 17.5-20.5%, more preferably 17.7-20.1%. In addition, the sum of the weight percentages of SiO₂+Al₂O₃ can be 75.5-82%, which will not only ensure sufficiently high mechanical properties but also enable the large-scale production with refractory-lined furnaces at relatively low temperatures. Preferably, the sum of the weight percentages of SiO₂+Al₂O₃ can be 76-81 %.

Meanwhile, the restricted weight percentage ratio C1= Al₂O₃/SiO₂ is 0.294-0.346, so that the glass can have higher mechanical properties and crystallization resistance as well as broader temperature range (ΔT) for fiber formation. The present invention not only ensures an effective packing of aluminum ions and provide sufficient vacancies for rare earth ions with relatively big radiuses, and also minimizes the risk of formation of glass structural stress and further enhances the stacking effect of the glass structure. To achieve these desired features, the restricted range of the weight percentage ratio C1= Al₂O₃/SiO₂ is 0.294-0.346.

Y₂O₃ is an important rare earth oxide. The inventors find that a relatively high amount of Y₂O₃ contained in the glass composition of this invention would noticeably increase the glass strength and modulus and inhibit the glass crystallization. As the external ions at the gaps of the glass network, Y³⁺ ions have large coordination numbers, high field strength and electric charge, and high accumulation capability. For these features, Y³⁺ ions can help not only to improve the structural stability of the glass and increase the glass strength and modulus, but also effectively prevent the movement and arrangement of other ions to minimize the crystallization tendency of the glass. The inventors find from experiments that the above technical effects are not noticeable when a small amount of Y₂O₃ is introduced. Meanwhile, as Y³⁺ ions have relatively big radiuses (0.09nm) compared with those of Al³⁺ (0.0535nm), Mg²⁺(0.072nm) and Li⁺(0.076nm) ions, the introduced amount of Y₂O₃ exceeding a certian value would lead to insufficient vacanies for the big Y³⁺ ions to fill, thus affecting the compact stacking of the glass structure and significantly increasing the glass density and structural stress. Therefore, in the glass fiber composition of this invention, the restricted content range of Y₂O₃ is 1.1-4.3%, preferably 2-4.2%, more preferably 2-4%, and still more preferably 2.3-3.9%.

Additionally, in order to achieve a better structural stacking, further increase the glass strength and modulus and acquire a favorable glass density, the restricted range of the weight percentage ratio C2= (Al₂O₃+MgO+Li₂O)/Y₂O₃ in this invention is 7.2-15, so that the proportions of the variuous ions with different radiuses can be effectively controlled for desired mechanical properties and compact stacking structure of the glass.

Furthermore, the restricted range of the weight percentage ratio of Al₂O₃+MgO+Li₂O can be at least 28.1%, preferably at least 28.6%, more preferably at least 29.1%, and still more preferably at least 29.6%.

In this invention, MgO and CaO mainly control the glass crystallization and regulate the glass viscosity and the rate of hardening of molten glass, and a high content of MgO has a favorable effect on the mechanical properties of the glass. With respect to the control of the glass crystallization and improvement of mechanical properties, the inventors have obtained unexpected effects by raising the MgO content and controlling the ratios of MgO/CaO and (Y₂O₃+MgO)/SiO₂. Relevant data shows that, for the conventional high-performance glass based on the MgO-CaO-Al₂O₃-SiO₂ system, where the content of CaO is relatively high, typically greater than 10% or even 12%, the crystal phases it contains after glass crystallization include mainly diopside (CaMgSi₂O₆) and anorthite (CaAl₂Si₂O₈). The competitive growth between these two crystals during the crystallization process is not so vigorous that no effective control of the crystallization rate can be achieved. Therefore, in this invention, the content of CaO is greatly reduced while the content of MgO is increased to create a shortage of CaO for crystallization, and consequently the crystal phases obtained after glass crystallization include mainly cordierite (Mg₂Al₄Si₅O₈) or a mixture of cordierite, enstatite (MgSiO₃) and anorthite, thereby effectively inhibiting the crystallization rate of the glass. At the same time, considering the differences of ionic radiuses and field strengths between Y³⁺ ions and Mg²⁺ ions, the ratios of each of these two ions to silica are rationally controlled, so that not only can a better effect of structural stacking be achieved, but also the movement and arrangement of Mg²⁺ ions can be further impeded and hence the effect of inhibiting the crystalization rate is strengthened.

Therefore, in the glass fiber composition of the present invention, the restricted content range of MgO is 10.3-14%, preferably 10.5-14%, more preferably greater than 11% but not greater than 13.5%, and even more preferably 11.2-13.5%; the restricted content range of CaO is lower than 6.5%, preferably not greater than 6.3%, more preferably can be 2-6%, and still more preferably 2.3-5.8%; the restricted range of the weight percentage ratio C3= (Y₂O₃+MgO)/SiO₂ can be at least 0.2, preferably at least 0.21, and more preferably at least 0.23; and the restricted range of the weight percentage ratio MgO/CaO can be at least 1.6, preferably at least 1.75, and more preferably at least 1.9.

Both K₂O and Na₂O can reduce glass viscosity and are good fluxing agents. Compared with Na₂O and K₂O, Li₂O can significantly reduce glass viscosity thereby improving the glass melting performance. In addition, a small amount of Li₂O provides considerable free oxygen, which helps more aluminum ions to form tetrahedral coordination, enhances the network structure of the glass and further improves the mechanical properties of glass. However, as too many alkali metal ions in the glass composition would affect the stability and corrosion resistance of the glass, the introduced amount should be limited. Therefore, in the glass fiber composition of the present invention, the restricted content range of Li₂O+Na₂O+K₂O is not greater than 1%, and the restricted content range of Li₂O is not greater than 0.75%. Preferably, the restricted content range of Li₂O is not greater than 0.7%, more preferably can be 0.05-0.7%, and still more preferably can be 0.1-0.65%. Preferably, the restricted content range of Li₂O+Na₂O+K₂O can be not greater than 0.98%, more preferably can be 0.25-0.98%, and still more preferably can be 0.3-0.95%. In addition, as both K⁺ and Na⁺ ions have relatively large radiuses (0.138nm and 0.102nm, respectively), when Y₂O₃ is introduced at a high amount, the sum of Na₂O+K₂O should be limited so as not to affect the stacking effect of the glass structure. Therefore, the restricted range of the weight percentage ratio Na₂O+K₂O can be lower than 0.7%, preferably lower than 0.55%.

TiO₂ can not only reduce the glass viscosity at high temperature, but also has a certain fluxing effect. However, since titanium ions in combination with ferric ions can have a certain coloring effect, which will affect the appearance of glass fiber-reinforced articles, the introduced amount should be limited. Therefore, in the glass fiber composition of the present invention, the restricted content range of TiO₂ is lower than 1.8%, preferably lower than 1.4%, and more preferably not greater than 0.8%.

Fe₂O₃ facilitates the melting of glass and can also improve the crystallization performance of glass. However, since ferric ions and ferrous ions have a coloring effect, the introduced amount should be limited. Therefore, in the glass fiber composition of the present invention, the restricted content range of Fe₂O₃ is 0.05-1.2%, preferably 0.05-1%.

In addition, the glass fiber composition of the present invention can include small amounts of other components with a total content not greater than 2%. Furthermore, the glass fiber composition of the present invention can include one or more components with a total content not greater than 2% selected from the group consisting of CeO₂, SrO, La₂O₃, ZnO, B₂O₃ and ZrO₂. Furthermore, the glass fiber composition of the present invention can include one or more components with a total content not greater than 1% selected from the group consisting of La₂O₃, ZnO, B₂O₃ and ZrO₂. Furthermore, the glass fiber composition of the present invention can include SrO with a content range of 0-1.7%. Furthermore, the glass fiber composition of the present invention can include SrO with a content range of 0.1-1.3%. Furthermore, the glass fiber composition of the present invention can include either or both of the components CeO₂ and SrO with a total content not greater than 1.3%. Furthermore, the glass fiber composition of the present invention can include CeO₂ with a content range of 0-0.55%. Furthermore, the glass fiber composition of the present invention can include CeO₂ with a content range of 0-0.25%. Furthermore, the glass fiber composition of the present invention can include F₂ with a content range of 0-0.5% and generally in the form of impurities contained in the glass raw materials. Furthermore, the glass fiber composition of the present invention may not include B₂O₃ that is generally introduced in the form of impurities contained in the glass raw materials. Furthermore, the glass fiber composition of the present invention can include La₂O₃ with a content range of 0-0.05%

Furthermore, the glass fiber composition of the present invention includes SiO₂, Al₂O₃, MgO, Y₂O₃, CaO, Li₂O, Na₂O, K₂O, TiO₂, Fe₂O₃ and other components with a total content equaling to or greater than 99%. Furthermore, the glass fiber composition of the present invention includes SiO₂, Al₂O₃, MgO, Y₂O₃, CaO, Li₂O, Na₂O, K₂O, TiO₂, Fe₂O₃ and other components with a total content equaling to or greater than 99.5%.

In the glass fiber composition of the present invention, the beneficial effects produced by the aforementioned selected ranges of the components will be explained by way of examples through the specific experimental data.

The following are examples of preferred content ranges of the components contained in the glass fiber composition according to the present invention.

### Preferred example 1

The high-performance glass fiber composition according to the present invention comprises the following components expressed as percentage by weight:

| | |
|---|---|
| SiO₂ | 57.4-61.4% |
| Al₂O₃ | 17.5-20.5% |
| MgO | 10.3-14% |
| Y₂O₃ | 2-4.2% |
| CaO | ≤6.3% |
| Li₂O+Na₂O+K₂O | ≤1% |
| Li₂O | ≤0.75% |
| TiO₂ | <1.4% |
| Fe₂O₃ | 0.05-1 % |

In addition, the combined weight percentage of the components listed above is at least 98%, and the weight percentage ratio C1= Al₂O₃/SiO₂ is 0.294-0.346.

### Preferred example 2

The high-performance glass fiber composition according to the present invention comprises the following components expressed as percentage by weight:

| | |
|---|---|
| SiO₂ | 57.4-61.4% |
| Al₂O₃ | 17.5-20.5% |
| MgO | 10.3-14% |
| Y₂O₃ | 2-4.2% |
| CaO | ≤6.3% |
| Li₂O+Na₂O+K₂O | ≤1% |
| Li₂O | ≤0.75% |
| TiO₂ | <1.4% |
| Fe₂O₃ | 0.05-1% |

In addition, the combined weight percentage of the components listed above is at least 98%, SrO in an amount of 0-1.7% by weight is also present in the above composition, and the range of the weight percentage ratio C1= Al₂O₃/SiO₂ is 0.294-0.346.

### Preferred example 3

The high-performance glass fiber composition according to the present invention comprises the following components expressed as percentage by weight:

| | |
|---|---|
| SiO₂ | 57.4-61.4% |
| Al₂O₃ | 17.5-20.5% |
| MgO | 10.3-14% |
| Y₂O₃ | 2-4.2% |
| CaO | ≤6.3% |
| Li₂O+Na₂O+K₂O | ≤1% |
| Li₂O | ≤0.75% |
| TiO₂ | <1.4% |
| Fe₂O₃ | 0.05-1% |

In addition, the combined weight percentage of the components listed above is at least 98%, SrO in an amount of 0-1.7% by weight and CeO₂ in an amount of 0-0.55% by weight are also present in the above composition, and the range of the weight percentage ratio C1= Al₂O₃/SiO₂ is 0.294-0.346.

### Preferred example 4

The high-performance glass fiber composition according to the present invention comprises the following components expressed as percentage by weight:

| | |
|---|---|
| SiO₂ | 58-60.4% |
| Al₂O₃ | 17.5-20.5% |
| MgO | 10.3-14% |
| Y₂O₃ | 2-4% |
| CaO | 2-6% |
| Li₂O+Na₂O+K₂O | ≤1% |
| Li₂O | ≤0.75% |
| TiO₂ | <1.4% |
| Fe₂O₃ | 0.05-1% |

In addition, the combined weight percentage of the components listed above is at least 98%, and the range of the weight percentage ratio C1 = Al₂O₃/SiO₂ is 0.294-0.346.

### Preferred example 5

The high-performance glass fiber composition according to the present invention comprises the following components expressed as percentage by weight:

| | |
|---|---|
| SiO₂ | 57.4-61.4% |
| Al₂O₃ | 17.5-20.5% |
| MgO | 10.3-14% |
| Y₂O₃ | 2-4.2% |
| CaO | ≤6.3% |
| Li₂O+Na₂O+K₂O | ≤1% |
| Li₂O | ≤0.75% |
| TiO₂ | <1.4% |
| Fe₂O₃ | 0.05-1% |

In addition, the combined weight percentage of the components listed above is at least 98%, CeO₂ in an amount of 0-0.55% by weight is also present in the above composition, and the range of the weight percentage ratio C1=Al₂O₃/SiO₂ is 0.294-0.346.

### Preferred example 6

The high-performance glass fiber composition according to the present invention comprises the following components expressed as percentage by weight:

| | |
|---|---|
| SiO₂ | 57.4-61.4% |
| Al₂O₃ | 17.5-20.5% |
| MgO | 10.3-14% |
| Y₂O₃ | 2-4.2% |
| CaO | ≤6.3% |
| Li₂O+Na₂O+K₂O | ≤1% |
| Li₂O | ≤0.75% |
| TiO₂ | <1.4% |
| Fe₂O₃ | 0.05-1% |

In addition, the combined weight percentage of the components listed above is at least 98%; the range of the weight percentage ratio C1= Al₂O₃/SiO₂ is 0.294-0.346 ; the range of the weight percentage ratio C2= (Al₂O₃+MgO+Li₂O)/Y₂O₃ is 7.2-15; and the combined weight percentage of Al₂O₃+MgO+Li₂O is at least 28.1%.

### Preferred example 7

The high-performance glass fiber composition according to the present invention comprises the following components expressed as percentage by weight:

| | |
|---|---|
| SiO₂ | 57.4-61.4% |
| Al₂O₃ | 17.5-20.5% |
| MgO | 10.3-14% |
| Y₂O₃ | 2-4% |
| CaO | ≤6.3% |
| Li₂O+Na₂O+K₂O | ≤1% |
| Li₂O | ≤0.75% |
| TiO₂ | <1.4% |
| Fe₂O₃ | 0.05-1% |

In addition, the combined weight percentage of the components listed above is at least 98%; the range of the weight percentage ratio C1= Al₂O₃/SiO₂ is 0.294-0.346 and the range of the weight percentage ratio C2= (Al₂O₃+MgO+Li₂O)/Y₂O₃ is 7.2-15.

### Preferred example 8

The high-performance glass fiber composition according to the present invention comprises the following components expressed as percentage by weight:

| | |
|---|---|
| SiO₂ | 57.4-61.4% |
| Al₂O₃ | 17.5-20.5% |
| MgO | 10.5-14% |
| Y₂O₃ | 2-4% |
| CaO | ≤6.3% |
| Li₂O+Na₂O+K₂O | ≤1% |
| Li₂O | <0.75% |
| TiO₂ | <1.4% |
| Fe₂O₃ | 0.05-1 % |

In addition, the combined weight percentage of the components listed above is at least 98%; the range of the weight percentage ratio C1= Al₂O₃/SiO₂ is 0.294-0.346; and the range of the weight percentage ratio C2= (Al₂O₃+MgO+Li₂O)/Y₂O₃ is 7.2-15.

### Preferred example 9

The high-performance glass fiber composition according to the present invention comprises the following components expressed as percentage by weight:

| | |
|---|---|
| SiO₂ | 58-60.4% |
| Al₂O₃ | 17.5-20.5% |
| MgO | 10.5-14% |
| Y₂O₃ | 2-4% |
| CaO | 2-6% |
| Li₂O+Na₂O+K₂O | ≤1% |
| Li₂O | ≤0.75% |
| TiO₂ | <1.4% |
| Fe₂O₃ | 0.05-1 % |

In addition, the combined weight percentage of the components listed above is at least 98%; the range of the weight percentage ratio C1= Al₂O₃/SiO₂ is 0.294-0.346 ; the range of the weight percentage ratio C2= (Al₂O₃+MgO+Li₂O)/Y₂O₃ is 7.2-15 ; and the combined weight percentage of Al₂O₃+MgO+Li₂O is at least 28.1%.

### Preferred example 10

The high-performance glass fiber composition according to the present invention comprises the following components expressed as percentage by weight:

| | |
|---|---|
| SiO₂ | 58-60.4% |
| Al₂O₃ | 17.5-20.5% |
| MgO | 10.3-14% |
| Y₂O₃ | 2-4% |
| CaO | 2-6% |
| Li₂O+Na₂O+K₂O | ≤1% |
| Li₂O | ≤0.75% |
| TiO₂ | <1.4% |
| Fe₂O₃ | 0.05-1 % |

In addition, the combined weight percentage of the components listed above is at least 98%; the range of the weight percentage ratio C1= Al₂O₃/SiO₂ is 0.294-0.346 ; the range of the weight percentage ratio C2= (Al₂O₃+MgO+Li₂O)/Y₂O₃ is 7.2-15; and the combined weight percentage of Al₂O₃+MgO+Li₂O is at least 28.1%.

### Preferred example 11

The high-performance glass fiber composition according to the present invention comprises the following components expressed as percentage by weight:

| | |
|---|---|
| SiO₂ | 58-60.4% |
| Al₂O₃ | 17.5-20.5% |
| MgO | greater than 11% but not greater than 13.5% |
| Y₂O₃ | 2-4% |
| CaO | 2-6% |
| Li₂O+Na₂O+K₂O | ≤1% |
| Li₂O | ≤0.75% |
| TiO₂ | <1.4% |
| Fe₂O₃ | 0.05-1 % |

In addition, the combined weight percentage of the components listed above is at least 98%; the range of the weight percentage ratio C1= Al₂O₃/SiO₂ is 0.294-0.346 ; the range of the weight percentage ratio C2= (Al₂O₃+MgO+Li₂O)Y₂O₃ is 7.2-15 ; and the combined weight percentage of Al₂O₃+MgO+Li₂O is at least 28.1%.

### Preferred example 12

The high-performance glass fiber composition according to the present invention comprises the following components expressed as percentage by weight:

| | |
|---|---|
| SiO₂ | 58-60.4% |
| Al₂O₃ | 17.7-20.1% |
| MgO | greater than 11% but not greater than 13.5% |
| Y₂O₃ | 2.3-3.9% |
| CaO | 2.3-5.8% |
| Li₂O+Na₂O+K₂O | ≤1% |
| Li₂O | 0.05-0.7% |
| TiO₂ | <1.4% |
| Fe₂O₃ | 0.05-1 % |

In addition, the combined weight percentage of the components listed above is at least 98%; the range of the weight percentage ratio C1= Al₂O₃/SiO₂ is 0.294-0.346 ; the range of the weight percentage ratio C2= (Al₂O₃+MgO+Li₂O)Y₂O₃ is 7.2-15 ; and the combined weight percentage of Al₂O₃+MgO+Li₂O is at least 29.1%.

### Preferred example 13

The high-performance glass fiber composition according to the present invention comprises the following components expressed as percentage by weight:

| | |
|---|---|
| SiO₂ | not lower than 58% but lower than 60% |
| Al₂O₃ | 17.7-20.1% |
| MgO | greater than 11% but not greater than 13.5% |
| Y₂O₃ | 2.3-3.9% |
| CaO | 2.3-5.8% |
| Li₂O+Na₂O+K₂O | ≤1% |
| Li₂O | 0.05-0.7% |
| TiO₂ | <1.4% |
| Fe₂O₃ | 0.05-1% |

In addition, the combined weight percentage of the components listed above is at least 98%; the range of the weight percentage ratio C1= Al₂O₃/SiO₂ is at least 0. 0.294-0.346 ; the range of the weight percentage ratio C2= (Al₂O₃+MgO+Li₂O)/Y₂O₃ is 7.2-15 ; and the combined weight percentage of Al₂O₃+MgO+Li₂O is at least 29.1%.

### Preferred example 14

The high-performance glass fiber composition according to the present invention comprises the following components expressed as percentage by weight:

| | |
|---|---|
| SiO₂ | 57.4-61.4% |
| Al₂O₃ | 17.5-20.5% |
| MgO | 10.3-14% |
| Y₂O₃ | 2-4.2% |
| CaO | ≤6.3% |
| Li₂O+Na₂O+K₂O | ≤1% |
| Li₂O | ≤0.75% |
| TiO₂ | <1.4% |
| Fe₂O₃ | 0.05-1 % |
| SrO+CeO₂+F₂ | <2% |
| SrO | 0-1.7% |
| CeO₂ | 0-0.55% |
| F₂ | 0-0.5% |

In addition, the range of the weight percentage ratio C1= Al₂O₃/SiO₂ is at least 0.294-0.346, and the range of the weight percentage ratio C2= (Al₂O₃+MgO+Li₂O)/Y₂O₃ is 7.2-15.

### Preferred example 15

The high-performance glass fiber composition according to the present invention comprises the following components expressed as percentage by weight:

| | |
|---|---|
| SiO₂ | 57.4-61.4% |
| Al₂O₃ | 17.5-20.5% |
| MgO | 10.3-14% |
| Y₂O₃ | 2-4.2% |
| CaO | ≤6.3% |
| Li₂O+Na₂O+K₂O | ≤1% |
| Li₂O | ≤0.75% |
| TiO₂ | <1.4% |
| Fe₂O₃ | 0.05-1 % |
| SrO+CeO₂+F₂ | <2% |
| SrO | 0-1.7% |
| CeO₂ | 0-0.55% |
| F₂ | 0-0.5% |

In addition, the range of the weight percentage ratio C1= Al₂O₃/SiO₂ is 0.294-0.346 ; the range of the weight percentage ratio C2= (Al₂O₃+MgO+Li₂O)/Y₂O₃ is 7.2-15 ; and the combined weight percentage of Al₂O₃+MgO+Li₂O is at least 28.1%.

### DETAILED DESCRIPTION OF THE INVENTION

In order to better clarify the purposes, technical solutions and advantages of the examples of the present invention, the technical solutions in the examples of the present invention are clearly and completely described below. Obviously, the examples described herein are just part of the examples of the present invention and are not all the examples. All other exemplary embodiments obtained by one skilled in the art on the basis of the examples in the present invention without performing creative work shall all fall into the scope of protection of the present invention. What needs to be made clear is that, as long as there is no conflict, the examples and the features of examples in the present application can be arbitrarily combined with each other.

The basic concept of the present invention is that the components of the glass fiber composition expressed as percentage by weight are: 57.4-61.4% SiO₂, 17.1-21% Al₂O₃, 10.3-14% MgO, 1.1-4.3% Y₂O₃, lower than 6.5% CaO, not greater than 1% Li₂O+Na₂O+K₂O, not greater than 0.75% Li₂O, lower than 1.8% TiO₂ and 0.05-1.2% Fe₂O₃, whererin the range of the combined weight percentage of these components is at least 98% and the range of the weight percentage ratio C1= Al₂O₃/SiO₂ is 0.294-0.346. Said composition can significantly increase the glass strength and modulus, effectively reduce the glass crystallization rate, secure a desirable temperature range (ΔT) for fiber formation and enhance the refinement of molten glass, thus making it particularly suitable for high performance glass fiber production with refractory-lined furnaces.

The specific content values of SiO₂, Al₂O₃, Y₂O₃, CaO, MgO, Li₂O, Na₂O, K₂O, Fe₂O₃ and TiO₂ in the glass fiber composition of the present invention are selected to be used in the examples, and comparisons with S glass, traditional R glass and improved R glass are made in terms of the following seven property parameters,
(1) Forming temperature, the temperature at which the glass melt has a viscosity of 10³ poise.
(2) Liquidus temperature, the temperature at which the crystal nucleuses begin to form when the glass melt cools off -- i.e., the upper limit temperature for glass crystallization.
(3) ΔT value, which is the difference between the forming temperature and the liquidus temperature and indicates the temperature range at which fiber drawing can be performed.
(4) Elastic modulus, the modulus defining the ability of glass to resist elastic deformation, which is to be measured on bulk glass as per ASTM E1876.
(5) Tensile strength, the maximum tensile stress that the glass fiber can withstand, which is to be measured on impregnated glass roving as per ASTM D2343.
(6) Crystallization area ratio, to be determined in a procedure set out as follows: Cut the bulk glass appropriately to fit in with a porcelain boat trough and then place the cut glass bar sample into the porcelain boat. Put the porcelain boat with the glass bar sample into a gradient furnace for crystallization and keep the sample for heat preservation for 6 hours. Take the boat with the sample out of the gradient furnace and air-cool it to room temperature. Finally, examine and measure the amounts and dimensions of crystals on the surfaces of each sample within the temperature range of 1060-1130°C from a microscopic view by using an optical microscope, and then calculate the area ratio of crystallization. A high area ratio would mean a high crystallization tendency and high crystallization rate.
(7) Amount of bubbles, to be determined in a procedure set out as follows: Use specific moulds to compress the glass batch materials in each example into samples of same dimension, which will then be placed on the sample platform of a high temperature microscope. Heat the samples according to standard procedures up to the pre-set spatial temperature 1500°C and then directly cool them off with the cooling hearth of the microscope to the ambient temperature without-heat preservation. Finally, each of the glass samples is examined under a polarizing microscope to determine the amount of bubbles in the samples. A bubble is identified according to a specific amplification of the microscope.

The aforementioned seven parameters and the methods of measuring them are well-known to one skilled in the art. Therefore, these parameters can be effectively used to explain the properties of the glass fiber composition of the present invention.

The specific procedures for the experiments are as follows: Each component can be acquired from the appropriate raw materials. Mix the raw materials in the appropriate proportions so that each component reaches the final expected weight percentage. The mixed batch melts and the molten glass refines. Then the molten glass is drawn out through the tips of the bushings, thereby forming the glass fiber. The glass fiber is attenuated onto the rotary collet of a winder to form cakes or packages. Of course, conventional methods can be used to deep process these glass fibers to meet the expected requirements.

Comparisons of the property parameters of the examples of the glass fiber composition according to the present invention with those of the S glass, traditional R glass and improved R glass are further made below by way of tables, wherein the component contents of the glass fiber composition are expressed as weight percentage. What needs to be made clear is that the total amount of the components in the examples is slightly less than 100%, and it should be understood that the remaining amount is trace impurities or a small amount of components which cannot be analyzed.

Examples A1, A15, A16, A21 and A22 are outside the scope of the claims.

**Table 1A**

| | | A1 | A2 | A3 | A4 | A5 | A6 | A7 |
|---|---|---|---|---|---|---|---|---|
| Component | SiO₂ | 59.50 | 59.50 | 59.50 | 58.85 | 58.85 | 58.85 | 58.85 |
| | Al₂O₃ | 18.70 | 18.70 | 18.70 | 19.05 | 19.05 | 19.05 | 19.05 |
| | CaO | 6.40 | 6.00 | 5.10 | 6.30 | 5.80 | 5.10 | 4.10 |
| | MgO | 11.30 | 11.30 | 11.30 | 10.30 | 10.80 | 11.50 | 12.50 |
| | Y₂O₃ | 1.80 | 2.30 | 3.20 | 3.40 | 3.40 | 3.40 | 3.40 |
| | Na₂O | 0.08 | 0.11 | 0.11 | 0.13 | 0.13 | 0.13 | 0.13 |
| | K₂O | 0.17 | 0.19 | 0.19 | 0.30 | 0.30 | 0.30 | 0.30 |
| | Li₂O | 0.70 | 0.65 | 0.65 | 0.47 | 0.47 | 0.47 | 0.47 |
| | Fe₂O₃ | 0.39 | 0.45 | 0.45 | 0.47 | 0.47 | 0.47 | 0.47 |
| | TiO₂ | 0.64 | 0.52 | 0.52 | 0.53 | 0.53 | 0.53 | 0.53 |
| | CeO₂ | 0.12 | 0.08 | 0.08 | - | - | - | - |
| Ratio | C1 | 0.314 | 0.314 | 0.314 | 0.324 | 0.324 | 0.324 | 0.324 |
| | C2 | 17.06 | 13.33 | 9.58 | 8.77 | 8.92 | 9.12 | 9.42 |
| | C3 | 0.220 | 0.229 | 0.244 | 0.233 | 0.241 | 0.253 | 0.270 |
| Parameter | Forming temperature/°C | 1304 | 1307 | 1309 | 1314 | 1311 | 1309 | 1306 |
| | Liquidus temperature/°C | 1218 | 1212 | 1207 | 1216 | 1211 | 1210 | 1217 |
| | ΔT /°C | 86 | 95 | 102 | 98 | 100 | 99 | 89 |
| | Elastic modulus/GPa | 94.1 | 94.6 | 95.8 | 95.0 | 95.4 | 96.3 | 96.5 |
| | Tensile strength/MPa | 3310 | 3400 | 3530 | 3460 | 3490 | 3590 | 3630 |
| | Crystallization area ratio/% | 19 | 15 | 9 | 11 | 10 | 7 | 9 |
| | Amount of bubbles/pcs | 8 | 9 | 10 | 10 | 11 | 9 | 10 |

**Table 1B**

| | | A8 | A9 | A10 | A11 | A12 | A13 | A14 |
|---|---|---|---|---|---|---|---|---|
| Component | SiO₂ | 58.85 | 58.85 | 59.00 | 59.00 | 59.00 | 60.00 | 60.00 |
| | Al₂O₃ | 19.05 | 19.05 | 18.80 | 18.80 | 18.80 | 18.30 | 17.70 |
| | CaO | 3.10 | 2.80 | 6.00 | 5.30 | 4.40 | 2.00 | 4.90 |
| | MgO | 13.50 | 14.00 | 11.10 | 11.40 | 12.00 | 12.40 | 11.70 |
| | Y₂O₃ | 3.40 | 3.40 | 3.00 | 3.40 | 3.70 | 4.20 | 3.30 |
| | Na₂O | 0.13 | 0.14 | 0.14 | 0.14 | 0.14 | 0.10 | 0.15 |
| | K₂O | 0.30 | 0.31 | 0.30 | 0.30 | 0.30 | 0.28 | 0.20 |
| | Li₂O | 0.47 | 0.30 | 0.50 | 0.50 | 0.50 | 0.60 | 0.65 |
| | Fe₂O₃ | 0.47 | 0.42 | 0.44 | 0.44 | 0.44 | 0.44 | 0.44 |
| | TiO₂ | 0.53 | 0.53 | 0.52 | 0.52 | 0.52 | 0.48 | 0.46 |
| | SrO | - | - | - | - | - | 1.00 | - |
| | ZrO₂ | - | - | - | - | - | - | 0.30 |
| Ratio | C1 | 0.324 | 0.324 | 0.319 | 0.319 | 0.319 | 0.305 | 0.295 |
| | C2 | 9.72 | 9.86 | 10.13 | 9.03 | 8.46 | 7.45 | 9.11 |
| | C3 | 0.287 | 0.296 | 0.239 | 0.251 | 0.266 | 0.277 | 0.250 |
| Parameter | Forming temperature/°C | 1304 | 1305 | 1309 | 1307 | 1303 | 1325 | 1310 |
| | Liquidus temperature/°C | 1219 | 1224 | 1211 | 1207 | 1206 | 1220 | 1213 |
| | ΔT /°C | 85 | 81 | 98 | 100 | 97 | 105 | 97 |
| | Elastic modulus/GPa | 95.7 | 95.2 | 95.1 | 96.0 | 97.3 | 96.8 | 95.6 |
| | Tensile strength/MPa | 3540 | 3500 | 3460 | 3540 | 3630 | 3670 | 3510 |
| | Crystallization area ratio/% | 14 | 17 | 11 | 8 | 8 | 14 | 9 |
| | Amount of bubbles/pcs | 9 | 8 | 10 | 9 | 9 | 10 | 9 |

**Table 1C**

| | | A15 | A16 | A17 | A18 | A19 | A20 | A21 |
|---|---|---|---|---|---|---|---|---|
| Component | SiO₂ | 58.00 | 57.10 | 59.10 | 58.40 | 58.90 | 60.40 | 61.40 |
| | Al₂O₃ | 18.60 | 20.10 | 17.50 | 18.80 | 18.60 | 17.80 | 18.00 |
| | CaO | 6.00 | 5.80 | 5.80 | 6.00 | 4.80 | 4.90 | 3.80 |
| | MgO | 10.50 | 10.00 | 11.00 | 11.10 | 11.20 | 11.30 | 11.60 |
| | Y₂O₃ | 4.30 | 4.00 | 3.70 | 3.50 | 3.20 | 3.30 | 2.90 |
| | Na₂O | 0.12 | 0.10 | 0.15 | 0.30 | 0.21 | 0.10 | 0.15 |
| | K₂O | 0.22 | 0.20 | 0.30 | 0.35 | 0.31 | 0.20 | 0.30 |
| | Li₂O | 0.60 | 0.64 | 0.50 | 0 | 0.38 | 0.65 | 0.55 |
| | Fe₂O₃ | 0.46 | 0.46 | 0.45 | 0.45 | 0.44 | 0.46 | 0.44 |
| | TiO₂ | 0.60 | 0.55 | 0.80 | 1.20 | 0.46 | 0.69 | 0.51 |
| | SrO | 0.40 | 0.85 | 0.50 | 0.60 | 1.30 | - | - |
| | La₂O₃ | - | - | - | - | - | - | 0.25 |
| Ratio | C1 | 0.321 | 0.352 | 0.296 | 0.322 | 0.316 | 0.295 | 0.293 |
| | C2 | 6.91 | 7.69 | 7.84 | 8.54 | 9.43 | 9.02 | 10.40 |
| | C3 | 0.255 | 0.245 | 0.249 | 0.250 | 0.244 | 0.242 | 0.236 |
| Parameter | Forming temperature/°C | 1299 | 1301 | 1300 | 1305 | 1310 | 1317 | 1325 |
| | Liquidus temperature/°C | 1210 | 1200 | 1209 | 1212 | 1210 | 1227 | 1235 |
| | ΔT /°C | 89 | 101 | 91 | 93 | 100 | 90 | 90 |
| | Elastic modulus/GPa | 96.3 | 96.0 | 95.5 | 96.1 | 96.5 | 95.1 | 94.9 |
| | Tensile strength/MPa | 3560 | 3460 | 3480 | 3500 | 3540 | 3460 | 3430 |
| | Crystallization area ratio/% | 7 | 13 | 8 | 9 | 11 | 16 | 19 |
| | Amount of bubbles/pcs | 6 | 7 | 8 | 7 | 8 | 10 | 12 |

**Table 1D**

| | | A22 | A23 | A24 | A25 | S glass | Traditional R glass | Improved R glass |
|---|---|---|---|---|---|---|---|---|
| Component | SiO₂ | 57.40 | 60.00 | 59.50 | 58.80 | 65 | 60 | 60.75 |
| | Al₂O₃ | 20.50 | 19.00 | 18.40 | 18.70 | 25 | 25 | 15.80 |
| | CaO | 4.10 | 3.90 | 4.90 | 5.30 | - | 9 | 13.90 |
| | MgO | 11.50 | 11.80 | 11.20 | 12.10 | 10 | 6 | 7.90 |
| | Y₂O₃ | 3.90 | 3.10 | 3.40 | 3.20 | - | - | - |
| | Na₂O | 0.08 | 0.12 | 0.12 | 0.15 | trace amount | trace amount | 0.73 |
| | K₂O | 0.12 | 0.21 | 0.31 | 0.23 | trace amount | trace amount | |
| | Li₂O | 0.75 | 0.60 | 0.50 | 0.50 | - | - | 0.48 |
| | Fe₂O₃ | 0.46 | 0.45 | 0.45 | 0.44 | trace amount | trace amount | 0.18 |
| | TiO₂ | 0.34 | 0.62 | 0.52 | 0.48 | trace amount | trace amount | 0.12 |
| | SrO | 0.55 | - | 0.70 | - | - | - | - |
| | CeO₂ | - | - | 0.05 | 0.10 | - | - | - |
| Ratio | C1 | 0.357 | 0.317 | 0.309 | 0.318 | 0.385 | 0.385 | 0.260 |
| | C2 | 8.40 | 10.13 | 8.85 | 9.78 | - | - | - |
| | C3 | 0.268 | 0.248 | 0.245 | 0.260 | 0.154 | 0.100 | 0.130 |
| Parameter | Forming temperature/°C | 1306 | 1321 | 1306 | 1303 | 1571 | 1430 | 1278 |
| | Liquidus temperature/°C | 1212 | 1216 | 1206 | 1205 | 1470 | 1350 | 1210 |
| | ΔT /°C | 94 | 105 | 100 | 98 | 101 | 80 | 68 |
| | Elastic modulus/GPa | 96.3 | 95.6 | 95.2 | 95.8 | 90 | 89 | 88 |
| | Tensile strength/MPa | 3560 | 3490 | 3460 | 3530 | 3460 | 2750 | 2500 |
| | Crystallization area ratio/% | 14 | 10 | 8 | 9 | 100 | 70 | 35 |
| | Amount of bubbles/pcs | 8 | 11 | 7 | 8 | 40 | 30 | 25 |

It can be seen from the values in the above tables that, compared with the S glass, the glass fiber composition of the present invention has the following advantages: (1) much higher elastic modulus; (2) much lower liquidus temperature and much lower crystallization area ratio, which indicate a low upper limit temperature for crystallization as well as a low crystallization rate and thus help to reduce the crystallization risk and increase the fiber drawing efficiency; and (3) smaller amount of bubbles, which indicates a better refining of molten glass.

In addition, compared with the traditional R glass and improved R glass, the glass fiber composition of the present invention has the following advantages: (1) much higher elastic modulus and strength; (2) much lower crystallization area ratio, which indicate a low crystallization rate and thus helps to reduce the crystallization risk and increase the fiber drawing efficiency; and (3) smaller amount of bubbles, which indicates a better refining of molten glass.

Both S glass and traditional R glass cannot enable the achievement of large-scale production with refractory-lined furnaces and, with respect to improved R glass, part of the glass properties is compromised to reduce the liquidus temperature and forming temperature, so that the production difficulty is decreased and the production with refractory-lined furnaces could be achieved. By contrast, the glass fiber composition of the present invention not only has a sufficiently low liquidus temperature, forming temperature and crystallization rate which enable the production with refractory-lined furnaces, but also significantly increases the glass modulus and strength, thereby resolving the technical bottleneck that the modulus and strength of S glass fiber cannot be improved with the growth of production scale.

Therefore it can be seen from the above that, compared with the current main-stream high-performance glasses, the glass fiber composition of the present invention has made a breakthrough in terms of elastic modulus, strength, crystallization rate and refining performance of the glass, with significantly improved modulus and strength, remarkably reduced crystallization rate and relatively small amount of bubbles under the same conditions. Thus, the overall technical solution of the present invention enables an easy achievement of large-scale production with refractory-lined furnaces.

The glass fiber composition according to the present invention can be used for making glass fibers having the aforementioned excellent properties.

The glass fiber composition according to the present invention in combination with one or more organic and/or inorganic materials can be used for preparing composite materials having excellent performances, such as glass fiber reinforced base materials.

Finally, what should be made clear is that, in this text, the terms "contain", "comprise" or any other variants are intended to mean "nonexclusively include" so that any process, method, article or equipment that contains a series of factors shall include not only such factors, but also include other factors that are not explicitly listed, or also include intrinsic factors of such process, method, object or equipment. Without more limitations, factors defined by such phrase as "contain a..." do not rule out that there are other same factors in the process, method, article or equipment which include said factors.

The above examples are provided only for the purpose of illustrating instead of limiting the technical solutions of the present invention. Although the present invention is described in details by way of aforementioned examples, one skilled in the art shall understand that modifications can also be made to the technical solutions embodied by all the aforementioned examples or equivalent replacement can be made to some of the technical features. However, such modifications or replacements will not cause the resulting technical solutions to substantially deviate from the spirits and ranges of the technical solutions respectively embodied by all the examples of the present invention.

### INDUSTRIAL APPLICABILITY OF THE INVENTION

The glass fiber composition of the present invention not only has a sufficiently low liquidus temperature, forming temperature and crystallization rate which enable the production with refractory-lined furnaces, but also significantly increases the glass modulus and strength, thereby resolving the technical bottleneck that the modulus and strength of S glass fiber cannot be improved with the enhanced production scale. Compared with the current main-stream high-performance glasses, the glass fiber composition of the present invention has made a breakthrough in terms of elastic modulus, strength, crystallization rate and refining performance of the glass, with significantly improved modulus and strength, remarkably reduced crystallization rate and relatively small amount of bubbles under the same conditions. Thus, the overall technical solution of the present invention enables an easy achievement of large-scale production with refractory-lined furnaces.

## Claims

1. A high-performance glass fiber composition, **characterized by**, comprising the following components expressed as percentage by weight:
| | |
|---|---|
| SiO₂ | 57.4-61.4% |
| Al₂O₃ | 17.1-21% |
| MgO | 10.3-14% |
| Y₂O₃ | 1.1-4.3% |
| CaO | <6.5% |
| Li₂O+Na₂O+K₂O | ≤1% |
| Li₂O | ≤0.75% |
| TiO₂ | <1.8% |
| Fe₂O₃ | 0.05-1.2% |
wherein, the combined weight percentage of the components listed above is at least 98%, and the range of the weight percentage ratio C1= Al₂O₃/SiO₂ is 0.294-0.346, the weight percentage ratio C2= (Al₂O₃+MgO+Li₂O)/Y₂O₃ is 7.2-15.

2. The high-performance glass fiber composition according to claim 1, **characterized by**, comprising the following components expressed as percentage by weight:
| | |
|---|---|
| SiO₂ | 57.4-61.4% |
| Al₂O₃ | 17.5-20.5% |
| MgO | 10.3-14% |
| Y₂O₃ | 2-4.2% |
| CaO | ≤6.3% |
| Li₂O+Na₂O+K₂O | ≤1% |
| Li₂O | ≤0.75% |
| TiO₂ | <1.4% |
| Fe₂O₃ | 0.05-1% |
wherein, the range of the combined weight percentage of the components listed above is at least 98%, and the range of the weight percentage ratio C1= Al₂O₃/SiO₂ is 0.294-0.346.

3. The high-performance glass fiber composition according to claim 1, **characterized by**, comprising the following components expressed as percentage by weight:
| | |
|---|---|
| SiO₂ | 58-60.4% |
| Al₂O₃ | 17.5-20.5% |
| MgO | 10.3-14% |
| Y₂O₃ | 2-4% |
| CaO | 2-6% |
| Li₂O+Na₂O+K₂O | ≤1% |
| Li₂O | ≤0.75% |
| TiO₂ | <1.4% |
| Fe₂O₃ | 0.05-1% |
wherein, the range of the combined weight percentage of the components listed above is at least 98%, and the range of the weight percentage ratio C1= Al₂O₃/SiO₂ is 0.294-0.346.

4. The high-performance glass fiber composition according to any of claims 1-3, **characterized by**, the range of the weight percentage ratio C3= (Y₂O₃+MgO)/SiO₂ is at least 0.2.

5. The high-performance glass fiber composition according to any of claims 1-3, **characterized by**, the content range of MgO by weight is greater than 11% but not greater than 13.5%.

6. The high-performance glass fiber composition according to any of claims 1-3, **characterized by**, comprising one or more components selected from the group consisting of CeO₂, SrO, La₂O₃, ZnO, B₂O₃ and ZrO₂, of which the total amount based on the said composition is lower than 2% by weight.

7. The high-performance glass fiber composition according to any of claims 1-3, **characterized by**, the range of the combined weight percentage of Al₂O₃+MgO+Li₂O is at least 28.1%.

8. The high-performance glass fiber composition according to any of claims 1-3, **characterized by**, the range of the weight percentage ratio MgO/CaO is at least 1.6.

9. The high-performance glass fiber composition according to claim 1, **characterized by**, comprising the following components expressed as percentage by weight:
| | |
|---|---|
| SiO₂ | 57.4-61.4% |
| Al₂O₃ | 17.5-20.5% |
| MgO | 10.3-14% |
| Y₂O₃ | 2-4% |
| CaO | ≤6.3% |
| Li₂O+Na₂O+K₂O | ≤1% |
| Li₂O | ≤0.75% |
| TiO₂ | <1.4% |
| Fe₂O₃ | 0.05-1% |
wherein, the combined weight percentage of the components listed above is at least 98%; the range of the weight percentage ratio C1= Al₂O₃/SiO₂ is 0.294-0.346; and the range of the weight percentage ratio C2= (Al₂O₃+MgO+Li₂O)/Y₂O₃ is 7.2-15.

10. The high-performance glass fiber composition according to claim 1, **characterized by**, comprising the following components expressed as percentage by weight:
| | |
|---|---|
| SiO₂ | 58-60.4% |
| Al₂O₃ | 17.5-20.5% |
| MgO | 10.5-14% |
| Y₂O₃ | 2-4% |
| CaO | 2-6% |
| Li₂O+Na₂O+K₂O | ≤1% |
| Li₂O | ≤0.75% |
| TiO₂ | <1.4% |
| Fe₂O₃ | 0.05-1% |
wherein, the combined weight percentage of the components listed above is at least 98%; the range of the weight percentage ratio C1= Al₂O₃/SiO₂ is 0.294-0.346; the range of the weight percentage ratio C2= (Al₂O₃+MgO+Li₂O)/Y₂O₃ is 7.2-15; and the range of the combined weight percentage of Al₂O₃+MgO+Li₂O is at least 28.1%.

11. The high-performance glass fiber composition according to claim 1, **characterized by**, comprising the following components expressed as percentage by weight:
| | |
|---|---|
| SiO₂ | 58-60.4% |
| Al₂O₃ | 17.7-20.1% |
| MgO | greater than 11% but not greater than 13.5% |
| Y₂O₃ | 2-4% |
| CaO | 2.3-5.8% |
| Li₂O+Na₂O+K₂O | ≤1% |
| Li₂O | 0.05-0.7% |
| TiO₂ | <1.4% |
| Fe₂O₃ | 0.05-1% |
wherein, the combined weight percentage of the components listed above is at least 98%; the range of the weight percentage ratio C1= Al₂O₃/SiO₂ is 0.294-0.346; the range of the weight percentage ratio C2= (Al₂O₃+MgO+Li₂O)/Y₂O₃ is 7.2-15; and the range of the combined weight percentage of Al₂O₃+MgO+Li₂O is at least 29.1%.

12. The high-performance glass fiber composition according to claim 1, **characterized by**, comprising the following components expressed as percentage by weight:
| | |
|---|---|
| SiO₂ | 57.4-61.4% |
| Al₂O₃ | 17.5-20.5% |
| MgO | 10.3-14% |
| Y₂O₃ | 2-4.2% |
| CaO | ≤6.3% |
| Li₂O+Na₂O+K₂O | ≤1% |
| Li₂O | ≤0.75% |
| TiO₂ | <1.4% |
| Fe₂O₃ | 0.05-1% |
| SrO+CeO₂+F₂ | <2% |
| SrO | 0-1.7% |
| CeO₂ | 0-0.55% |
| F₂ | 0-0.5% |
wherein, the range of the weight percentage ratio C1= Al₂O₃/SiO₂ is 0.294-0.346, and the range of the weight percentage ratio C2= (Al₂O₃+MgO+Li₂O)/Y₂O₃ is 7.2-15.

13. A glass fiber, **characterized by**, being produced from any of the glass fiber compositions described in claims 1-12.

14. A composite material, **characterized by**, incorporating the glass fiber described in claim 13.

## Patentansprüche

1. Hochleistungsglasfaserzusammensetzung, **dadurch gekennzeichnet, dass** sie die folgenden Komponenten umfasst, ausgedrückt in Gewichtsprozent:
| | |
|---|---|
| SiO₂ | 57,4-61,4% |
| Al₂O₃ | 17,1-21% |
| MgO | 10,3-14% |
| Y₂O₃ | 1,1-4,3% |
| CaO | < 6,5% |
| Li₂O + Na₂O + K₂O | ≤ 1 % |
| Li₂O | ≤ 0,75% |
| TiO₂ | < 1,8% |
| Fe₂O₃ | 0,05-1,2%, |
wobei der kombinierte Gewichtsprozentanteil der oben aufgeführten Komponenten wenigstens 98% beträgt, der Bereich des Gewichtsprozentverhältnisses C1 = Al₂O₃/SiO₂ = 0,294-0,346 ist und der Bereich des Gewichtsprozentverhältnisses C2 = (Al₂O₃+MgO+Li₂O)/Y₂O₃ = 7,2-15 ist.

2. Hochleistungsglasfaserzusammensetzung gemäß Anspruch 1, **dadurch gekennzeichnet, dass** sie die folgenden Komponenten umfasst, ausgedrückt in Gewichtsprozent:
| | |
|---|---|
| SiO₂ | 57,4-61,4% |
| Al₂O₃ | 17,5-20,5% |
| MgO | 10,3-14% |
| Y₂O₃ | 2-4,2% |
| CaO | ≤ 6,3% |
| Li₂O + Na₂O + K₂O | ≤ 1 % |
| | |
|---|---|
| Li₂O | ≤ 0,75% |
| TiO₂ | < 1,4% |
| Fe₂O₃ | 0,05-1%, |
wobei der Bereich des kombinierten Gewichtsprozentanteils der oben aufgeführten Komponenten wenigstens 98% beträgt und der Bereich des Gewichtsprozentverhältnisses C1 = Al₂O₃/SiO₂ = 0,294-0,346 ist.

3. Hochleistungsglasfaserzusammensetzung gemäß Anspruch 1, **dadurch gekennzeichnet, dass** sie die folgenden Komponenten umfasst, ausgedrückt in Gewichtsprozent:
| | |
|---|---|
| SiO₂ | 58-60,4% |
| Al₂O₃ | 17,5-20,5% |
| MgO | 10,3-14% |
| Y₂O₃ | 2-4% |
| CaO | 2-6% |
| Li₂O + Na₂O + K₂O | ≤ 1 % |
| Li₂O | ≤ 0,75% |
| TiO₂ | < 1,4% |
| Fe₂O₃ | 0,05-1%, |
wobei der Bereich des kombinierten Gewichtsprozentanteils der oben aufgeführten Komponenten wenigstens 98% beträgt und der Bereich des Gewichtsprozentverhältnisses C1 = Al₂O₃/SiO₂ = 0,294-0,346 ist.

4. Hochleistungsglasfaserzusammensetzung gemäß einem der Ansprüche 1 bis 3, **dadurch gekennzeichnet, dass** der Bereich des Gewichtsprozentverhältnisses C3 = (Y₂O₃+MgO)/SiO₂ wenigstens 0,2 ist.

5. Hochleistungsglasfaserzusammensetzung gemäß einem der Ansprüche 1 bis 3, **dadurch gekennzeichnet, dass** der Gehaltsbereich an MgO größer als 11 Gew.-%, aber nicht größer als 13,5 Gew.-% ist.

6. Hochleistungsglasfaserzusammensetzung gemäß einem der Ansprüche 1 bis 3, **dadurch gekennzeichnet, dass** sie eine oder mehrere Komponenten umfasst, die aus der Gruppe, die aus CeO₂, SrO, La₂O₃, ZnO, B₂O₃ und ZrO₂ besteht, ausgewählt sind und deren Gesamtmenge, bezogen auf die Zusammensetzung, kleiner als 2 Gew.-% ist.

7. Hochleistungsglasfaserzusammensetzung gemäß einem der Ansprüche 1 bis 3, **dadurch gekennzeichnet, dass** der Bereich des kombinierten Gewichtsprozentanteils von Al₂O₃ + MgO + Li₂O wenigstens 28,1% ist.

8. Hochleistungsglasfaserzusammensetzung gemäß einem der Ansprüche 1 bis 3, **dadurch gekennzeichnet, dass** der Bereich des Gewichtsprozentverhältnisses MgO/CaO wenigstens 1,6 ist.

9. Hochleistungsglasfaserzusammensetzung gemäß Anspruch 1, **dadurch gekennzeichnet, dass** sie die folgenden Komponenten umfasst, ausgedrückt in Gewichtsprozent:
| | |
|---|---|
| SiO₂ | 57,4-61,4% |
| Al₂O₃ | 17,5-20,5% |
| MgO | 10,3-14% |
| Y₂O₃ | 2-4% |
| CaO | ≤ 6,3% |
| Li₂O + Na₂O + K₂O | ≤ 1 % |
| Li₂O | ≤ 0,75% |
| TiO₂ | < 1,4% |
| Fe₂O₃ | 0,05-1%, |
wobei der kombinierte Gewichtsprozentanteil der oben aufgeführten Komponenten wenigstens 98% beträgt, der Bereich des Gewichtsprozentverhältnisses C1 = Al₂O₃/SiO₂ = 0,294-0,346 ist und der Bereich des Gewichtsprozentverhältnisses C2 = (Al₂O₃+MgO+Li₂O)/Y₂O₃ = 7,2-15 ist.

10. Hochleistungsglasfaserzusammensetzung gemäß Anspruch 1, **dadurch gekennzeichnet, dass** sie die folgenden Komponenten umfasst, ausgedrückt in Gewichtsprozent:
| | |
|---|---|
| SiO₂ | 58-60,4% |
| Al₂O₃ | 17,5-20,5% |
| MgO | 10,5-14% |
| Y₂O₃ | 2-4% |
| CaO | 2-6% |
| Li₂O + Na₂O + K₂O | ≤ 1 % |
| Li₂O | ≤ 0,75% |
| TiO₂ | < 1,4% |
| Fe₂O₃ | 0,05-1%, |
wobei der kombinierte Gewichtsprozentanteil der oben aufgeführten Komponenten wenigstens 98% beträgt, der Bereich des Gewichtsprozentverhältnisses C1 = Al₂O₃/SiO₂ = 0,294-0,346 ist, der Bereich des Gewichtsprozentverhältnisses C2 = (Al₂O₃+MgO+Li₂O)/Y₂O₃ = 7,2-15 ist und der Bereich des kombinierten Gewichtsprozentanteils von Al₂O₃ + MgO + Li₂O wenigstens 28,1% ist.

11. Hochleistungsglasfaserzusammensetzung gemäß Anspruch 1, **dadurch gekennzeichnet, dass** sie die folgenden Komponenten umfasst, ausgedrückt in Gewichtsprozent:
| | |
|---|---|
| SiO₂ | 58-60,4% |
| Al₂O₃ | 17,7-20,1% |
| MgO | mehr als 11%, aber nicht mehr als 13,5% |
| Y₂O₃ | 2-4% |
| CaO | 2,3-5,8% |
| Li₂O + Na₂O + K₂O | ≤ 1 % |
| Li₂O | 0,05-0,7% |
| TiO₂ | < 1,4% |
| Fe₂O₃ | 0,05-1%, |
wobei der kombinierte Gewichtsprozentanteil der oben aufgeführten Komponenten wenigstens 98% beträgt, der Bereich des Gewichtsprozentverhältnisses C1 = Al₂O₃/SiO₂ = 0,294-0,346 ist, der Bereich des Gewichtsprozentverhältnisses C2 = (Al₂O₃+MgO+Li₂O)/Y₂O₃ = 7,2-15 ist und der Bereich des kombinierten Gewichtsprozentanteils von Al₂O₃ + MgO + Li₂O wenigstens 29,1% ist.

12. Hochleistungsglasfaserzusammensetzung gemäß Anspruch 1, **dadurch gekennzeichnet, dass** sie die folgenden Komponenten umfasst, ausgedrückt in Gewichtsprozent:
| | |
|---|---|
| SiO₂ | 57,4-61,4% |
| Al₂O₃ | 17,5-20,5% |
| MgO | 10,3-14% |
| Y₂O₃ | 2-4,2% |
| CaO | ≤ 6,3% |
| Li₂O + Na₂O + K₂O | ≤ 1 % |
| Li₂O | ≤ 0,75% |
| TiO₂ | < 1,4% |
| Fe₂O₃ | 0,05-1%, |
| SrO + CeO₂ + F₂ | < 2% |
| SrO | 0-1,7% |
| CeO₂ | 0-0,55% |
| F₂ | 0-0,5% |
wobei der Bereich des Gewichtsprozentverhältnisses C1 = Al₂O₃/SiO₂ = 0,294-0,346 ist und der Bereich des Gewichtsprozentverhältnisses C2 = (Al₂O3+MgO+Li2O)/Y₂O₃ = 7,2-15 ist.

13. Glasfaser, **dadurch gekennzeichnet, dass** sie aus einer der in den Ansprüchen 1 bis 12 beschriebenen Glasfaserzusammensetzung erzeugt ist.

14. Verbundstoff, **dadurch gekennzeichnet, dass** er die in Anspruch 13 beschriebene Glasfaser umfasst.

## Revendications

1. Composition pour fibres de verre à haute performance, **caractérisée en ce qu'**elle comprend les composants suivants exprimés en pourcentage en poids :
| | |
|---|---|
| SiO₂ | 57,4-61,4 % |
| Al₂O₃ | 17,1-21 % |
| MgO | 10,3-14 % |
| Y₂O₃ | 1,1-4,3 % |
| CaO | < 6,5 % |
| Li₂O + Na₂O + K₂O | ≤ 1 % |
| Li₂O | ≤ 0,75 % |
| TiO₂ | < 1,8 % |
| Fe₂O₃ | 0,05-1,2 %, |
où les pourcentages en poids combinés des composants susmentionnés est au moins 98 %, et la gamme des rapports de pourcentages en poids C1 = Al₂O₃/SiO₂ est 0,294-0,346, les rapports de pourcentages en poids C2 = (Al₂O₃+MgO+Li₂O)/Y₂O₃ est 7,2-15.

2. Composition pour fibres de verre à haute performance selon la revendication 1, **caractérisée en ce qu'**elle comprend les composants suivants exprimés en pourcentage en poids :
| | |
|---|---|
| SiO₂ | 57,4-61,4 % |
| Al₂O₃ | 17,5-20,5 % |
| MgO | 10,3-14 % |
| Y₂O₃ | 2-4,2 % |
| CaO | ≤ 6,3 % |
| Li₂O + Na₂O + K₂O | ≤ 1 % |
| Li₂O | ≤ 0,75 % |
| TiO₂ | < 1,4 % |
| Fe₂O₃ | 0,05-1 %, |
où les pourcentages en poids combinés des composants susmentionnés est au moins 98 %, et la gamme des rapports de pourcentages en poids C1 = Al₂O₃/SiO₂ est 0,294-0,346.

3. Composition pour fibres de verre à haute performance selon la revendication 1, **caractérisée en ce qu'**elle comprend les composants suivants exprimés en pourcentage en poids :
| | |
|---|---|
| SiO₂ | 58-60,4 % |
| Al₂O₃ | 17,5-20,5 % |
| MgO | 10,3-14 % |
| Y₂O₃ | 2-4 % |
| CaO | 2-6 % |
| Li₂O + Na₂O + K₂O | ≤ 1 % |
| Li₂O | ≤ 0,75 % |
| TiO₂ | < 1,4 % |
| Fe₂O₃ | 0,05-1 %, |
où les pourcentages en poids combinés des composants susmentionnés est au moins 98 %, et la gamme des rapports de pourcentages en poids C1 = Al₂O₃/SiO₂ est 0,294-0,346.

4. Composition pour fibres de verre à haute performance selon l'une quelconque des revendications 1 à 3, **caractérisée en ce que** la gamme des rapports de pourcentages en poids C3 = (Y₂O₃+MgO)/SiO₂ est au moins 0,2.

5. Composition pour fibres de verre à haute performance selon l'une quelconque des revendications 1 à 3, **caractérisée en ce que** la gamme des pourcentages en poids de MgO est supérieure à 11 % en poids, mais pas supérieure à 13,5 % en poids.

6. Composition pour fibres de verre à haute performance selon l'une quelconque des revendications 1 à 3, **caractérisée en ce qu'**elle comprend un ou plusieurs composants choisis dans le groupe consistant en CeO₂, SrO, La₂O₃, ZnO, B₂O₃ et ZrO₂, et leur quantité totale, par rapport à ladite composition, est inférieure à 2 % en poids.

7. Composition pour fibres de verre à haute performance selon l'une quelconque des revendications 1 à 3, **caractérisée en ce que** la gamme des pourcentages en poids combinés de Al₂O₃ + MgO + Li₂O est au moins 28,1 %.

8. Composition pour fibres de verre à haute performance selon l'une quelconque des revendications 1 à 3, **caractérisée en ce que** la gamme des rapports de pourcentages en poids de MgO/CaO est au moins 1,6.

9. Composition pour fibres de verre à haute performance selon la revendication 1, **caractérisée en ce qu'**elle comprend les composants suivants exprimés en pourcentage en poids :
| | |
|---|---|
| SiO₂ | 57,4-61,4 % |
| Al₂O₃ | 17,5-20,5 % |
| MgO | 10,3-14 % |
| Y₂O₃ | 2-4 % |
| CaO | ≤ 6,3 % |
| Li₂O + Na₂O + K₂O | ≤ 1 % |
| Li₂O | ≤ 0,75 % |
| TiO₂ | < 1,4 % |
| Fe₂O₃ | 0,05-1 %, |
où les pourcentages en poids combinés des composants susmentionnés est au moins 98 %, et la gamme des rapports de pourcentages en poids C1 = Al₂O₃/SiO₂ est 0,294-0,346, les rapports de pourcentages en poids C2 = (Al₂O₃+MgO+Li₂O)/Y₂O₃ est 7,2-15.

10. Composition pour fibres de verre à haute performance selon la revendication 1, **caractérisée en ce qu'**elle comprend les composants suivants exprimés en pourcentage en poids :
| | |
|---|---|
| SiO₂ | 58-60,4 % |
| Al₂O₃ | 17,5-20,5 % |
| MgO | 10,5-14 % |
| Y₂O₃ | 2-4 % |
| CaO | 2-6 % |
| Li₂O + Na₂O + K₂O | ≤ 1 % |
| Li₂O | ≤ 0,75 % |
| TiO₂ | < 1,4 % |
| Fe₂O₃ | 0,05-1 %, |
où les pourcentages en poids combinés des composants susmentionnés est au moins 98 %, la gamme des rapports de pourcentages en poids C1 = Al₂O₃/SiO₂ est 0,294-0,346, les rapports de pourcentages en poids C2 = (Al₂O₃+MgO+Li₂O)/Y₂O₃ est 7,2-15, et la gamme des pourcentages en poids combinés de Al₂O₃ + MgO + Li₂O est au moins 28,1 %.

11. Composition pour fibres de verre à haute performance selon la revendication 1, **caractérisée en ce qu'**elle comprend les composants suivants exprimés en pourcentage en poids :
| | |
|---|---|
| SiO₂ | 58-60,4 % |
| Al₂O₃ | 17,7-20,1 % |
| MgO | plus de 11 %, mais pas plus de 13,5 % |
| Y₂O₃ | 2-4 % |
| CaO | 2,3-5,8 % |
| Li₂O + Na₂O + K₂O | ≤ 1 % |
| Li₂O | 0,05-0,7 % |
| TiO₂ | < 1,4 % |
| Fe₂O₃ | 0,05-1 %, |
où les pourcentages en poids combinés des composants susmentionnés est au moins 98 %, la gamme des rapports de pourcentages en poids C1 = Al₂O₃/SiO₂ est 0,294-0,346, la gamme des rapports de pourcentages en poids C2 = (Al₂O₃+MgO+Li₂O)/Y₂O₃ est 7,2-15, et la gamme des pourcentages en poids combinés de Al₂O₃ + MgO + Li₂O est au moins 29,1 %.

12. Composition pour fibres de verre à haute performance selon la revendication 1, **caractérisée en ce qu'**elle comprend les composants suivants exprimés en pourcentage en poids :
| | |
|---|---|
| SiO₂ | 57,4-61,4 % |
| Al₂O₃ | 17,5-20,5 % |
| MgO | 10,3-14 % |
| Y₂O₃ | 2-4,2 % |
| CaO | ≤ 6,3 % |
| Li₂O + Na₂O + K₂O | ≤ 1 % |
| Li₂O | ≤ 0,75 % |
| TiO₂ | < 1,4 % |
| Fe₂O₃ | 0,05-1 %, |
| SrO + CeO₂ + F₂ | < 2 % |
| SrO | 0-1,7 % |
| CeO₂ | 0-0,55 % |
| F2 | 0-0,5 % |
où la gamme des rapports de pourcentages en poids C1 = Al₂O₃/SiO₂ est 0,294-0,346, et la gamme des rapports de pourcentages en poids C2 = (Al₂O₃+MgO+Li₂O)/Y₂O₃ est 7,2-15.

13. Fibre de verre, **caractérisée en ce qu'**elle est préparée à partir d'une quelconque des compositions pour fibres de verre décrites dans les revendications 1 à 12.

14. Matériau composite, **caractérisé en ce qu'**il comprend la fibre de verre décrite dans la revendication 13.
